# EUROPEAN PATENT APPLICATION

(11) **EP 1 741 569 A2**
(43) Date of publication of application: **10.01.2007**
(21) Application number: 06012343.7
(22) Date of filing: 15.06.2006
(51) Int. Cl.: B60C 17/00

(54) **Self-supporting type pneumatic run-flat tire, and insert and bead rubber composition for run-flat capability**

(30) Priority: 07.07.2005 KR 20050061090
(71) Applicant: Hankook Tire Co., Ltd., Gangnam-gu, Seoul 135-723 (KR)
(72) Inventor: Park, Jong Bok, Yuseong-gu Daejeon 305-345 (KR); Chang, Doo Young, Daejeon 305-804 (KR)
(74) Representative: McDonough, Jonathan

(57) **Abstract**

A self-supporting type pneumatic run-flat tire is optimized in location and gauge of insert rubber at sidewalls, thereby enhancing run-flat and expansion capabilities. The self-supporting type pneumatic run-flat tire comprises an insert and bead rubber composition which comprises syndiotactic 1,2-polybutadiene in order to enhance run-flat capability.

## Description

### BACKGROUND OF THE INVENTION

### Field of the Invention

The present invention relates to a self-supporting type pneumatic run-flat tire, which has a structure of radial carcass and is applicable to standards of 60-series or less, and an insert and bead rubber composition for run-flat capability. More particularly, the present invention relates to a self-supporting type pneumatic run-flat tire which is optimized in location and gauge of insert rubber at sidewalls, thereby enhancing run-flat and expansion capabilities, and to an insert and bead rubber composition which comprises syndiotactic 1,2-polybutadiene for run-flat capability.

### Description of the Related Art

Various self-supporting type pneumatic run-flat tires have been developed by many tire manufacturers since 1970's. Some of them are disclosed in US Patent No. 3,949,798 filed in 1974, and assigned to Firestone Tire Rubber Co., and in patents assigned to Dunlop Tire Co. For the self-supporting type pneumatic run-flat tires disclosed in the publication, a run-flat capability can be secured by reinforcing sidewalls with a specific insert rubber, but an expansion capability is deteriorated. In this regard, many manufacturers have developed tires of various structures which can ensure the run-flat capability while preventing the expansion capability from being deteriorated. Some of them are disclosed in Japanese Patent Laid-open Publication Nos. 1998-138720 and 1998-067211 of Bridgestone Corp., U.S. Patent No. 6,536,494 assigned to Dunlop Tire Co.

On the other hand, an amount of reinforcing filler or vulcanizing agent is increased for the purpose of enhancing rigidity of the sidewalls in the run-flat tire. In this case, since the specific gravity of the reinforcing filler is in the range of 1.8 ~ 2.0, it acts as a main cause of an increase in weight of rubber products, which causes difficulty in weight reduction of the tire, and therefore causes several problems in weight reduction of a vehicle.

Since such conventional self-supporting type pneumatic run-flat tires produced as described above are disadvantageous in terms of fatigue resistance, crack resistance, and exothermic resistance, they fail to maintain requirement for the run-flat capability, leading to splitting of the rubber. In particular, the conventional self-supporting type pneumatic run-flat tires cannot be prevented from being increased in weight due to reinforcement of the insert.

### SUMMARY OF THE INVENTION

The present invention has been made to solve the above problems, and it is an object of the present invention to provide a self-supporting type pneumatic run-flat tire, which comprises an insert rubber so as to be optimized in location and gauge of the insert rubber at sidewalls, thereby enhancing run-flat and expansion capabilities.

It is another object of the present invention to provide an insert and bead rubber composition for run-flat capability, which comprises syndiotactic 1,2-polybutadiene in place of the conventional reinforcing filler in order to allow only a small amount of filler to be filled in the tire, and to permit rubber products thereof to have a reduced weight and to be secured in strength of the insert and the bead.

It is yet another object of the present invention to provide the insert and bead rubber composition for the run-flat capability, which comprises syndiotactic 1,2-polybutadiene with a reduced amount of the reinforcing filler for the improvement of the run-flat capability of the run-flat tire such that the weight of rubber is decreased, whereby the rubber composition of the sidewall insert and bead is lowered in its weight, enhanced in tensile strength, fatigue resistance, crack resistance, and exothermic resistance at the same hardness and modulus, and prevents an increase in weight of the tire while satisfying run-flat endurance, thereby enhancing fuel efficiency of a vehicle.

In accordance with one aspect of the present invention, the above and other objects can be accomplished by the provision of a self-supporting type pneumatic run-flat tire comprising a tread, a sidewall and a bead, which is adapted to run stably at a predetermined velocity for a predetermined distance and capable of self-supporting a load of a vehicle upon reduction in internal pressure of the tire for standards of 60-series or less, characterized in that an insert rubber is located between an inner liner positioned inside the tire and carcasses constituting a frame of the tire, and a reinforcing sheet is located between the sidewall of the bead and an outermost carcass to enhance endurance of the bead contacting a rim flange when the run-flat tire runs on a road.

### BRIEF DESCRIPTION OF THE DRAWINGS

The foregoing and other objects and features of the present invention will be more clearly understood from the following detailed description taken in conjunction with the accompanying drawings, in which:
Fig. 1 is a cross-sectional view taken across a diameter of a self-supporting type pneumatic run-flat tire according to the present invention, illustrating one side of the normally expanded tire;
Fig. 2 is a cross-sectional view taken across the diameter of the tire similar to Fig. 1, illustrating a location of an insert rubber provided to a sidewall, a turn up height (TUH) of a carcass, and a bead filler height (BFH) of a bead filler in the tire; and
Fig. 3 is a cross-sectional view taken across the diameter of the tire similar to Fig. 1, illustrating a gauge and a location of the insert rubber in the tire in accordance with the present invention.

### DESCRIPTION OF THE PREFERRED EMBODIMENTS

Preferred embodiments of the present invention will be described in detail with reference to the accompanying drawings.

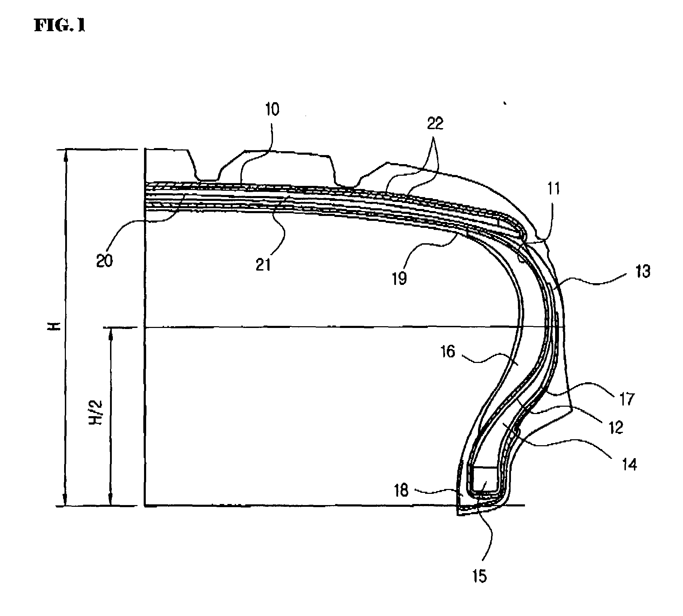

Fig. 1 is a cross-sectional view taken across a diameter of a self-supporting type pneumatic run-flat tire according to the present invention, illustrating one side of the normally expanded tire.

Referring to Fig. 1, the self-supporting type pneumatic run-flat tire according to the present invention comprises a tread 10 contacting a road, a sidewall 13 to protect first and second carcasses 11 and 12 from external impact, a bead filler 14 to regulate rigidity of the sidewall 13, a bead wire 15 to seat the tire on a rim, an insert rubber 16 provided to the sidewall 13 to secure run-flat capability, and a reinforcing sheet 17 for preventing rubber from being separated between the bead filler 14, first and second carcasses 11 and 12 and at the sidewall 13 at a bead contacting a rim flange upon running of the run flat tire.

Reference numerals 18, 19, 20, 21, and 22 denote chapper textile fabrics, an inner liner, a first belt layer, a second belt layer, and a reinforcing belt layer, respectively.

According to the present invention, in the run-flat tire having a height SH in a cross section as shown in Fig. 1, the insert rubber 16 between the inner liner 19 and the first carcass 11 preferably has a thickest section located at about half of the height SH of the tire, and is gradually decreased in thickness towards the belt layers 20 and 21, and towards the bead wire 15.

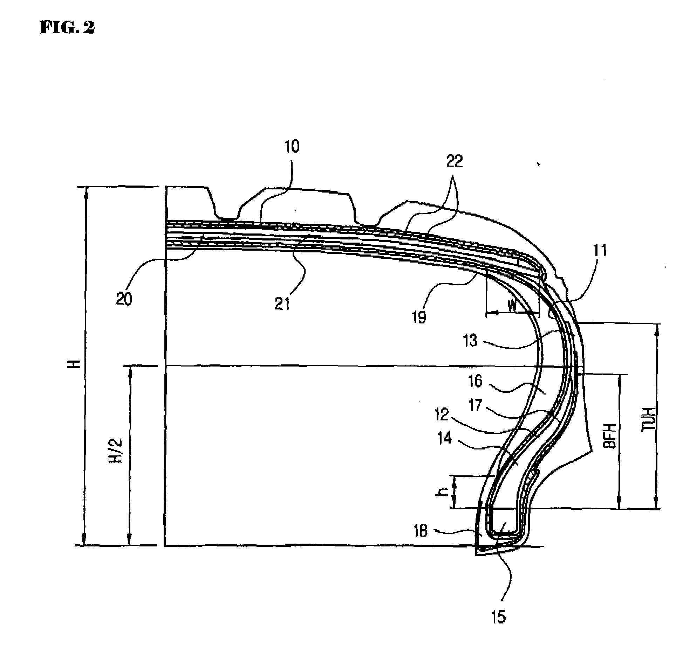

Fig. 2 is a cross-sectional view taken across the diameter of the tire similar to Fig. 1, illustrating a location of the insert rubber 16 provided to the sidewall, a turn up height (TUH) of the carcass, a bead filler height (BFH) of the bead filler, and the like.

Referring to Fig. 2, according to the present invention, the insert rubber 16 used for securing the run-flat capability starts from its original point "h" spaced a distance of at least 5 mm or more from above the bead wire 15, and preferably spaced a distance in the range of 5 mm < h < 20 mm from above the bead wire 15.

The insert rubber 16 extends to its end point "W" spaced a distance of at least 5 mm or more from the first belt layer 20, preferably spaced a distance in the range of 5 mm < h < 25 mm from the first belt layer 20.

As shown in Fig. 2, for the pneumatic radial tire which employs one or more sheets of classes, it is preferable that a THU (turn up height) of the first carcass 11 is lower than the height H, but is higher than half of the height H. More preferably, the first carcass 11 has a THU in the range of 50 ~ 70 % of the height H. In addition, it is preferable that the THU of the first carcass 11 is at least 10 mm higher than a BFH (bead filler height).

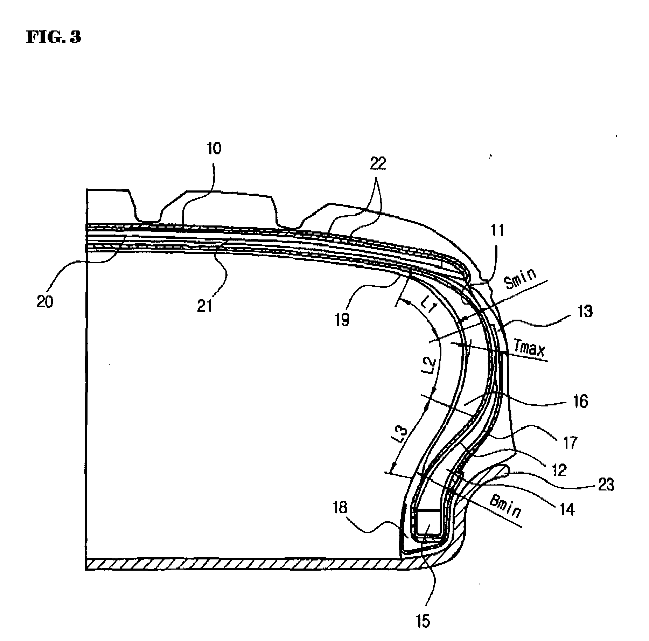

Fig. 3 is a cross-sectional view taken across the diameter of the tire similar to Fig. 1, illustrating a gauge and a location of the insert rubber 16 in the tire of the present invention.

When dividing the insert rubber 16 of the present invention into a first section L1, a second section L2, and a third section L3, the insert rubber 16 preferably has the maximum thickness in the second section L2, so that the thickness of the first section L1 gradually thins towards the belt layers 20 and 21, and the thickness of the third section L3 also gradually thickness towards the bead wire 15.

Preferably, the insert rubber 16 is designed such that the minimum gauge Sₘᵢₙ of the whole sidewall is located at a border between the first section L1 and the second section L2, and similar to the minimum gauge Bₘᵢₙ of the whole bead in the bead contacting the rim flange 23. More preferably, a ratio of Sₘᵢₙ/Bₘᵢₙ is in the range of 0.9 ~ 1.1.

The reinforcing sheet 17 is formed from a point spaced a distance of 5 mm or more from the bead wire to a point spaced a distance of 10 mm or more from above the bead filler in order to protect the bead when the run-flat tire runs on the road.

In accordance with the present invention, an insert and bead rubber composition is provided, which comprises: 20 ~ 80 parts by weight of natural rubber as a raw rubber; 10 ~ 80 parts by weight of polybutadiene with syndiotactic 1,2-polybutadiene well dispersed therein in place of the reinforcing filler; 20 ~ 70 parts by weight of filler for the 0 ~ 50 parts by weight of polybutadiene; 0.5 ~ 6 parts by weight of sulfur as a vulcanizing agent; 0.5 ~ 4 parts by weight of sulfenamide as a vulcanization accelerator; and 0.5 ~ 5 parts by weight of a deterioration inhibitor in order to enhance the run-flat capability of the sidewall insert and bead rubber.

In the present invention, polybutadiene with syndiotactic 1, 2-polybutadiene well dispersed therein preferably comprises 3 ~ 35 % of syndiotactic 1, 2-polybutadiene.

The content of polybutadiene containing syndiotactic 1, 2-polybutadiene is preferably in the range of 10 ~ 80 parts by weight of the whole raw rubber. If the content of polybutadiene is less than 10 parts by weight, it is difficult to secure a desired modulus level since syndiotactic 1, 2-polybutadiene does not sufficiently act as the reinforcing filler. On the contrary, if the content of polybutadiene is more than 80 parts by weight, there arise drawbacks such as reduction in workability of mixing and extrusion, in crack resistance, and in exothermic properties due to excessively high contents of butadiene and syndiotactic 1,2-polybutadiene.

In addition, if the content of syndiotactic 1,2-polybutadiene is less than 3 %, it cannot act as the reinforcing filler, so that the rubber of the present invention does not exhibit a significant difference in its capability from that of a general butadiene rubber. On the contrary, if the content of syndiotactic 1,2-polybutadiene exceeds 35 %, the modulus is rapidly increased, making it difficult to obtain a suitable run-flat capability. Thus, syndiotactic 1,2-polybutadiene is preferably in the range of 10 ~ 20 % in order to obtain the suitable run-flat capability.

In the insert and bead rubber composition of the present invention, syndiotactic polybutadiene is included in place of the reinforcing filler of the conventional rubber composition, thereby preventing an increase in weight due to the reinforcing filler, while ensuring the fatigue resistance, crack resistance, and exothermic resistance.

Examples of the present invention will be described hereinafter. In this regard, it should be noted that the examples of the present invention are provided only for an illustrative purpose, and do not limit the scope of the present invention.

### Examples 1 and 2

A rubber composition comprising a natural rubber (STR-20), polybutadiene (VCR617 available from UBEPOL) containing syndiotactic 1,2-polybutadiene, carbon black (GPF), zinc oxide (KS #2), stearic acid (curing agent, P60), anti-aging agent 1 (6PPD), anti-aging agent 2 (RD), sulfur (powder sulfur), a vulcanization accelerator (TBBS), deterioration inhibitor (KA9188 available from Bayer) according to the composition shown in Table 1, was vulcanized at a temperature of 160 °C for 20 minutes. On the basis of ASTM standards, vulcanized sheets were tested in order to measure tensile properties, Tan δ, fatigue resistance, crack resistance, exothermic resistance, specific gravity, results of which are listed in Table 2.

After producing run-flat tires comprising the rubber composition of the present invention, the tires were evaluated to confirm various capabilities, which are shown in Table 3. In the table, the endurance of each run-flat tire is expressed by an order of magnitude converted from a period of time until the tire fails to function normally after the tire is assembled to a rim, maintained for 24 hours at a temperature of 38 °C with an internal pressure of 2.5 kg/cm², adjusted in the internal pressure to atmospheric pressure by removing a valve, and started to run on a drum (a diameter of 1.7 m) at a velocity of 80 km/h with a load of 400 kg. In table 3, the order of magnitude of Example 1 is expressed by 100 as a control. Rotation resistance of each Example was obtained according to Coast Down Test (SAE J2452) after assembling the tire to the rim, and the order of magnitude of each Example is expressed by 100 as a control.

### Comparative Examples 1 to 3

After preparing a rubber composition which was formed by mixing various additives according to the composition shown in Table 1, except that a butadiene rubber (KBR01 available from Kumho Petrochemical Co.) was used instead of polybutadiene containing syndiotactic 1,2-polybutadiene, the rubber composition was vulcanized at a temperature of 160 °C for 20 minutes. On the basis of ASTM standards, vulcanized sheets were tested in order to measure tensile properties, Tan 8, fatigue resistance, crack resistance, exothermic resistance, specific gravity, results of which are listed in Table 2.

After producing run-flat tires comprising the rubber composition of Comparative Examples 1 and 3, the tires were evaluated to confirm various capabilities, which are shown in Table 3. In the table, the endurance of each run-flat tire is expressed by an order of magnitude convented from to a period of time until the tire fails to function normally after the tire is assembled to a rim, maintained for 24 hours at a temperature of 38 °C with an internal pressure of 2.5 kg/cm², adjusted in the internal pressure to atmospheric pressure by removing a valve, and started to run on a drum (a diameter of 1.7 m) at a velocity of 80 km/h with a load of 400 kg. In table 3, the order of magnitude of Example 1 is expressed by 100 as a control. Rotation resistance of each Example was obtained according to Coast Down Test (SAE J2452) after assembling the tire to the rim, and the order of magnitude of Example 1 is expressed by 100 as a control.

**Table 1**

| Composition | Example 1 | Example 2 | Comparative Example 1 | Comparative Example 2 | Comparative Example 3 |
|---|---|---|---|---|---|
| Natural rubber polybutadiene containing syndiotactic 1,2-polybutadiene | 30 | 30 | 30 | 30 | 30 |
| | 70 | 50 | | | |
| Butadiene rubber | | 20 | 70 | 70 | 70 |
| Carbon black | 45 | 55 | 45 | 65 | 65 |
| Zinc oxide | 5 | 5 | <- | <- | <- |
| Stearic acid | 2 | 2 | <- | <- | <- |
| Anti-aging agent 1 | 1.5 | 1.5 | <- | <- | <- |
| Anti-aging agent 2 | 1.5 | 1.5 | <- | <- | <- |
| Sulfur | 3.0 | 3.0 | <- | <- | 3.0 |
| Vulcanization accelerator | 1.5 | 1.5 | <- | <- | 2.0 |
| Deterioration inhibitor | 1.0 | 1.0 | <- | <- | 1.0 |
| | | | | | (Unit: part by weight) |

**Table 2**

| | | Example 1 | Example 2 | Comparative Example 1 | Comparative Example 2 | Comparative Example 3 |
|---|---|---|---|---|---|---|
| Tensile properties | Hardness | 75 | 75 | 65 | 71 | 74 |
| | Modulus | 75 | 77 | 40 | 65 | 73 |
| | Elongation | 190 | 200 | 200 | 150 | 120 |
| | Tensile strength | 160 | 155 | 145 | 120 | 110 |
| Fatigue resistance | Life cycle | 6000 | 5000 | 6000 | 1500 | 500 |
| Crack resistance | Growth rate | 0.4 | 0.4 | 0.4 | 1.0 | 2.0 |
| Tan δ Specific gravity | At 80 | 0.04 | 0.04 | 0.04 | 0.08 | 0.07 |
| | g/cc | 1.34 | 1.35 | 1.35 | 1.41 | 1.41 |

**Table 3**

| | | Example 1 | Example 2 | Comparative Example 1 | Comparative Example 2 |
|---|---|---|---|---|---|
| Run-flat endurance | Order of magnitude | 100 | 100 | 10 | 30 |
| Rotation resistance | Order of magnitude | 100 | 90 | 95 | 95 |

As apparent from the above description, according to the present invention, the run-flat tire comprises syndiotactic 1,2-polybutadiene with a reduced amount of the reinforcing filler for the purpose of enhancing the run-flat capability such that the weight of rubber is decreased, whereby the tensile strength, fatigue resistance, crack resistance, and exothermic resistance of the run-flat tire are increased at the same hardness and modulus.

In addition, according to the present invention, the run-flat tire is prevented from being increased in weight while satisfying the run-flat endurance property, thereby enhancing fuel efficiency of a vehicle.

It should be understood that the embodiments and the accompanying drawings as described above have been described for illustrative purposes and the present invention is limited by the following claims. Further, those skilled in the art will appreciate that various modifications, additions and substitutions are allowed without departing from the scope and spirit of the invention as set forth in the accompanying claims.

## Claims

1. A self-supporting type pneumatic run-flat tire comprising a tread, a sidewall and a bead, which adapted to run stably at a predetermined velocity for a predetermined distance and capable of self-supporting a load of a vehicle upon reduction in internal pressure of the tire for standards of 60-series or less, ***characterized in that,***
an insert rubber is located between an inner liner positioned inside the tire and a carcass constituting a frame of the tire, and a reinforcing sheet is located between the sidewall of the bead and an outermost carcass to enhance endurance of the bead contacting a rim flange when the run-flat tire runs on a road.

2. The run-flat tire according to claim 1, wherein an original point "h" of the insert rubber is set in the range of 5 mm ~ 20 mm from above the bead wire.

3. The run-flat tire according to claim 1, wherein an end point "w" of the insert rubber is set in the range of 5 mm ~ 20 mm from the first belt layer.

4. The run-flat tire according to claim 1, wherein, when dividing the insert rubber into a first section L1, a second section L2, and a third section L3, the insert rubber has a maximum gauge Tₘₐₓ located in the second section L2.

5. The run-flat tire according to claim 1, wherein, when dividing the insert rubber into a first section L1, a second section L2, and a third section L3, the whole sidewall has a minimum gauge Sₘᵢₙ located at a border between the first section L1 and the second section L2.

6. The run-flat tire according to claim 5, wherein the minimum gauge Sₘᵢₙ of the whole sidewall is similar to the minimum gauge Bₘᵢₙ of the whole bead in the bead contacting the rim flange.

7. The run-flat tire according to claim 6, wherein a ratio of the minimum gauge Bₘᵢₙ of the whole bead to the minimum gauge Sₘᵢₙ of the whole sidewall is in the range of 0.9 ~ 1.1.

8. An insert and bead rubber composition, comprising a natural rubber as a raw rubber, a polybutadiene rubber, filler, a vulcanizing agent, a vulcanization accelerator, and a deterioration inhibitor for run-flat capability, ***characterized in that***
the natural rubber as the raw rubber is in the range of 20 ~ 80 parts by weight, polybutadiene with a syndiotactic 1,2-polybutadience well dispersed therein is in the range of 10 ~ 80 parts by weight, and the polybutadiene rubber is in the range of 0 ~ 50 parts by weight.

9. The rubber composition according to claim 8, wherein the polybutadiene with a syndiotactic 1,2-polybutadiene well dispersed therein comprises 3 ~ 35 % of syndiotactic 1,2-polybutadiene.
